Europäisches Patentamt

European Patent Office

Office européen des brevets

(19)

(11) Veröffentlichungsnummer: **0 198 561**
**B1**

(12) **EUROPÄISCHE PATENTSCHRIFT**

(45) Veröffentlichungstag der Patentschrift:
02.08.89

(21) Anmeldenummer: 86200632.7

(22) Anmeldetag: 15.04.86

(51) Int. Cl.⁴: **C 03 C 25/02,** H 01 B 13/14

(54) Vorrichtung zum Beschichten einer Faser.

(30) Priorität: 19.04.85 NL 8501146

(43) Veröffentlichungstag der Anmeldung:
22.10.86 Patentblatt 86/43

(45) Bekanntmachung des Hinweises auf die Patenterteilung:
02.08.89 Patentblatt 89/31

(84) Benannte Vertragsstaaten:
AT BE CH DE FR GB IT LI NL SE

(56) Entgegenhaltungen:
FR-A-2 381 324
US-A-4 370 355
US-A-4 409 263
US-H-963 002

(73) Patentinhaber: **N.V. Philips' Gloeilampenfabrieken,**
**Groenewoudseweg 1, NL- 5621 BA Eindhoven (NL)**

(72) Erfinder: **Jochem, Cornelis M. G.,** p/A INT.
**OCTROOIBUREAU B.V. Prof. Holstlaan 6, NL-**
**5656 AA Eindhoven (NL)**
Erfinder: **van der Ligt, Jacobus. W. C.,** p/A INT.
**OCTROOIBUREAU B.V. Prof. Holstlaan 6, NL-**
**5656 AA Eindhoven (NL)**

(74) Vertreter: **Hartung, Edgar Erwin,**
**INTERNATIONAAL OCTROOIBUREAU B.V. Prof.**
**Holstlaan 6, NL- 5656 AA Eindhoven (NL)**

## Beschreibung

Die Erfindung bezieht sich auf eine Vorrichtung zum Beschichten einer Faser mit einem Gehäuse mit einer Druckkammer, einer Düse mit einer Ausströmungsöffnung, einem Absperrteil, das die Druckkammer auf der Oberseite absperrt und das einen Führungskanal mit einer Eingangsöffnung aufweist zum Zuführen und Führen einer zu beschichtenden Faser, einer Zuführungsöffnung in der Wand des Gehäuses zum Zuführen flüssigen Beschichtungsmaterials und mit einer Überlauf- öffnung in der Seitenwand des Gehäuses.

Fasern werden oft zum Schutz vor mechanischer Beschädigung, zur Isolierung, für Kodierungszwecke usw. mit einer Beschichtung versehen. So müssen beispielsweise Glasfasern, die für optische Kommunikation verwendet werden, unmittelbar nach der Herstellung, nach dem Ziehen aus einem Tiegel oder aus einer Vorform mit einer Schutzschicht bedeckt werden. Weil Glas ein spröder Werkstoff ist, ist die Stärke und die mechanische Zuverlässigkeit der Faser auf längere Frist von der Güte der Oberfläche der Faser stark abhängig. Kratzer, Haarrisse und Staubteilchen auf der Oberfläche der Faser sind nicht erlaubt. Zum Erhalten einer Faser mit einer einwandfreien Oberfläche müssen die Temperatur und Gasverhältnisse in dem Ziehofen bzw. in dem Tiegel sorgfältig gewählt werden. Damit diese einmal erhaltene einwandfreie Oberfläche der Faser beibehalten wird, muss die Faser mit einer Schutzschicht bedeckt werden. Dies muss in einem ununterbrochenen Prozess erfolgen, bevor die Faser irgendwie mit einem Fremdkörper in Berührung kommt. Staubfreie Bedingungen vor der Beschichtung der Faser sind von wesentlicher Bedeutung. Das Beschichtungsmaterial, meistens ein polymerer Kunststoff, wird in flüssiger Form angebracht und dann durch UV-Licht thermisch ausgehärtet. Die Beschichtung kann aus einer einzigen Kuntstoffschicht oder aus zwei Schutzschichten bestehen; bei einer Doppelbeschichtung können zwei Kunststoffschichten oder eine erste Schicht aus einem relativ weichen Material, wie Silikonkautschuk oder einem "Hot Melt"-Wachs, und eine zweite Schicht aus Kunststoff angebracht werden. Es ist üblich, auf einer vielfach verwendeten Normglasfaser mit einem Durchmesser von 125 µm eine Beschichtung mit einer Dicke zwischen 25 und 60 µm anzubringen. Grundsätzlich wird eine Glasfaser dadurch mit einer Beschichtung versehen, dass die Faser durch einen Behälter mit flüssigem Beschichtungsmaterial hindurchgeführt und dann durch die Ausströmungsöffnung einer Düse gezogen wird. Die Beschichtung soll koaxial bzw. konzentrisch bezüglich der Faser angebracht werden, m.a.W. die Dicke der Beschichtung soll über den Umfang der Faser gesehen konstant sein. Eine Faser mit einer nicht konzentrischen Beschichtung ist beim Abkühlen oder Erhitzen asymmetrischen Kräften ausgesetzt. Diese asymmetrischen Kräfte sind die Folge ungleicher Ausdehnungskoeffizienten des Fasermaterials und des Beschichtungsmaterials und können zu unerwünschten Änderungen der optischen Eigenschaften der Faser führen. Ausserdem kann die Faser über einen Teil des Umfanges ungenügend geschützt sein. Die konzentrische Lage der Faser und der Beschichtung wird mit Hilfe einer Regelvorrichtung ständig gemessen. Ein Fehler in der Konzentrizität muss korrigiert oder aufgehoben werden.

Ein anderes Beispiel einer Faser, die mit einer Beschichtung versehen werden soll, ist Kupferwickeldraht. Der Durchmesser des in der Praxis verwendeten Wickeldrahtes liegt zwischen 20 µm und 1250 µm. Dieser Draht wird mit einer elektrisch isolierenden Beschichtung versehen, die aus einer Lackschicht besteht, deren Dicke zunimmt von 4 µm für einen Draht mit einem Durchmesser von 20 µm, bis 60 µm für einen Draht mit einem Durchmesser von 1250 µm. Wegen der relativ geringen Dicke der Beschichtung ist für diese Art von Fasern eine konzentrische Beschichtung unbedingt erforderlich.

Aus der US Patentschrift 4 374 161 ist eine Vorrichtung zum Beschichten optischer Fasern bekannt mit Vorkehrungen zur genauenen Einstellung der Vorrichtung in der x- und der y-Richtung, damit etwaige Fehler in der relativen Lage der Faser und der Beschichtung aufgehoben und die Faser sowie die Beschichtung gegenüber einander zentriert werden. Diese Art von Zentrieren und zwar durch die Einstellung der ganzen Einheit, erfordert relativ grosse Verschiebungen in der Grössenordnung von mm und stellt an die Form der Ausströmungsöffnung in der Düse hohe Anforderungen; diese muss auf die Faser eine zentrierende Wirkung haben; falls die Abmessungen der Ausströmungsöffnung etwas geändert sind, z. B. durch Verschleiss, funktioniert dieses Verfahren nicht mehr. Die Beschichtungsvorrichtung bildet einen Teil einer Faserziehanlage und ist derart angeordnet, dass die Mittellinie der Vorrichtung mit der Mittellinie der Ziehanlage zusammenfällt. Wenn nun das ganze Gehäuse der Beschichtungsvorrichtung in der x-y-Richtung verschoben wird, fallen die Mittellinien der Vorrichtung und der Ziehanlage nicht mehr zusammen, wodurch auch die Faser aus der Mittellinie der Ziehanlage verschoben wird.

Derartige etwaige Verschiebungen müssen in der Einheit der Ziehanlage, die sich an die Beschichtungsvorrichtung anschliesst und zwar in der Aushärteanlage berücksichtigt werden. Die Eingangsöffnung dieser Anlage muss derart gross bemessen sein, dass die Faser, auch wenn diese nicht mehr die Mittellinie der Ziehanlage folgt, den Rand der Öffnung nicht berühren kann. Eine grosse Eingangsöffnung der Aushärteanlage weist jedoch den Nachteil auf, dass Sauerstoff leichter eintreten kann, was ein schnelles Aushärten beeinträchtigt.

Ausserdem wird eine Faser, die nicht mit der Mittellinie der Aushärteanlage zusammenfällt, nicht radialsymmetrisch erwärmt, sodass Transport von flüssigem Beschichtungsmaterial auf der Faser auftritt und die konzentrisch angebrachte Beschichtung dennoch exzentrisch wird (Marangoni-Effekt).

Wenn die nachfolgende Einheit der Ziehanlage eine zweite Beschichtungsvorrichtung ist, was der Fall ist, wenn die Faser mit einer Doppelbeschichtung versehen wird, muss nach der x-y-Verschiebung der einen Beschichtungsvorrichtung auch die andere Beschichtungsvorrichtung in der x-y-Richtung eingestellt werden.

Eine Vorrichtung der eingangs erwähnten Art ist aus der US Patentschrift 4 409 263 bekannt; bei dieser bekannten Vorrichtung werden die obengenannten Nachteile vermieden; dazu ist die Vorrichtung mit zwei Düsen versehen, die je eine eingeschnürte Öffnung aufweisen; das flüssige Beschichtungsmaterial wird unter Druck zugeführt; die zu beschichtende Faser wird in den beiden Düsen zentriert. Eine etwaige exzentrisch Lage der Faser und der Beschichtung lässt sich nicht nachregeln bzw. aufheben.

Die Erfindung hat nun zur Aufgabe, eine Vorrichtung zum Beschichten von Faser zu schaffen, mit der Abweichungen in der relativen koaxialen Lage von Faser und Beschichtung auf einfache und reproduzierbare Weise nachgeregelt und aufgehoben werden können.

Diese Aufgabe wird nach der Erfindung im wesentlichen dadurch erzielt, dass der Führungskanal in einem rohrförmigen, elastisch verformbaren Führungselement angeordnet ist, das auf dem Absperrteil angebracht ist und von dem wenigstens das freie Ende in radialer Richtung einstellbar ist.

Lediglich durch Einstellung des freien Endes des rohrförmien Führungselementes können Beschichtung und Faser gegenüber einander entriert werden. Abweichungen in der Konzentrizität der Faser und der Beschichtung können einerseits aufgehoben werden, während andererseits nicht das ganze Gehäuse eingestellt zu werden braucht. Die Mittellinie er Ausströmungsöffnung in der Düse wird nach wie vor mit der Mittellinie der Ziehanlage zusammenfallen, so dass auch die Faser nach wie vor mit der Mittellinie der Ziehanlage zusammenfällt. Die Eingangsöffnung der Aushärteanlage kann minimal bemessen sein ohne die Gefahr vor Beführung der Faser. Zwecks der Entfernung von Sauerstoff aus der Aushärteanlage, was zur schnellen Aushärtung notwendig ist, ist eine enge Eingangsöffnung vorteilhaft. In der Praxis hat es sich herausgestellt, dass minimale Verschiebungen des Endes des rohrförmigen Führungselementes, d.h. Verschiebungen in der Grössenordnung von 0,5 mm, ausreichen um etwaige Abweichungen in der Konzentrizität von Faser und Beschichtung auszugleichen.

Durch diese Massnahmen kann die erwünschte Einstellung lediglich durch eine geringe elastische Verformung bzw. Verbiegung des rohrförmigen Führungselementes erfolgen. Diese Konstruktion ist verschleissfest und spielfrei.

Die beschichtete Faser folgt der Mittellinie der Aushärtevorrichtung, so dass Beschichtung und Faser radialsymmetrisch erwärmt werden. Wenn die Ziehanlage zwei Beschichtungsvorrichtungen zum Anbringen einer Doppelbeschichtung auf der Faser aufweist, erfordert die Einstellung der einen Beschichtungsvorrichtung nicht zwangsläufig die Einstellung der anderen Beschichtungsvorrichtung.

Es sei bemerkt, dass aus der US Patentschrift 4 116 654 eine Vorrichtung zum Beschichten optischer Fasern bekannt ist, die mit einem einstellbaren starren Führungsrohr versehen ist, das derart eingestellt wird, dass eine Beschichtung mit einer gleichmässigen Schichtdicke erhalten wird. Da beim Einstellen eine Verschiebung der Eingangsöffnung sowie der Ausströmungsöffnung des Führungsrohres erfolgt, besteht auch hier die Gefahr, dass die Faser und/oder die Ausströmungsöffnung ausserhalb der Mittellinie der Ziehanlage zu liegen kommt.

In diesem Zusammenhang wird weiterhin auf die US Patentschrift 4 370 355 hingewiesen, aus welcher eine Vorrichtung zum Beschichten optischer Fasern bekannt ist mit einer Düse, die aus einem verhältnismässig elastischen Material hergestellt ist und die mit einer Auslassöffnung versehen ist, welche den Durchmesser der beschichteten Faser bestimmt. Durch mehr oder weniger starke Verformung und Kompression der Düse in radialer Richtung mittels eines Iris Diaphragmas kann der Durchmesser der beschichteten Faser beeinflusst werden. Hierbei wird ein Verbiegen der Düse entlang der Mittellinie der Faser vermieden. Im Gegensatz hierzu wird bei der erfindungsgemässen Vorrichtung das rohrförmige Führungselement nicht in radialer Richtung zusammengedrückt sondern derart verformt, dass eine Verbiegung stattfinden kann.

Weil bei einer bevorzugten Ausführungsform der erfindungsgemässen Vorrichtung die Eingangsöffnung des Führungskanals eingeschnürt ist, wird in der Eingangsöffnung beim Beschichten der Faser ein Zentriereffekt auf die Faser ausgeübt, wodurch ein einwandfreies Einstellen erleichtert wird.

Eine weitere bevorzugte Ausführungsform der erfindungsgemässen Vorrichtung weist das Kennzeichen auf, dass das rohrförmige Führungselement aus Polytetrafluoräthylen hergestellt ist. Dieser Werkstoff ist verschleissfest, leicht bearbeitbar und wird von dem flüssigen Beschichtungsmaterial nicht benetzt, was zum Anbringen einer konzentrischen und blasenfreien Beschichtung auf der Faser fördernd wirkt.

Zum Einstellen des rohrförmigen Führungselementes kann ein an sich bekannter herkömmlicher Einstellmechanismus verwendet werden, der im wesentlichen drei gleichmässig über den Umfang des rohrförmigen Führungselementes verteilte Einstellschrauben aufweist, die mit dem freien Ende des Führungselementes zusammenwirken.

Eine einfachere Einstellung ist jedoch bei einer anderen bevorzugten Ausführungsform der erfindungsgemässen Vorrichtung dadurch möglich, dass auf dem freien Ende des rohrförmigen Führungselementes ein Einstellblock angebracht ist, der mit zwei senkrecht aufeinander stehenden Führungsrillen versehen ist, die mit zwei scheibenförmigen Elementen zusammenwirken, welche an den Enden zweier senkrecht zueinander stehender Spindeln angeordnet sind, die mittels einer Schraubverbindung in der Wand des Gehäuses einstellbar sind. Durch diese konstruktiven Massnahmen reichen zwei Einstellelemente und zwar die beiden Spindeln, so dass eine einwandfreie Einstellung schneller und genauer erfolgen kann als bei dem herkömmlichen Einstellmechanismus mit drei Einstellelementen.

Dadurch, dass bei einer weiteren bevorzugten Ausführungsform der erfindungsgemässen Vorrichtung die Düse über einen verengten Ausströmungskanal mit der Druckkammer in Verbindung steht, wird auf die Faser beim Durchlaufen des Ausströmungskanals ein zentrierender Effekt ausgeübt, wodurch die ganze Zentrierung stabilisiert wird.

Eine andere bevorzugte Ausführungsform der erfindungsgemässen Vorrichtung weist das Kennzeichen auf, dass das Gehäuse eine Umlaufkammer aufweist, die den der Ausströmungsöffnung zugewandten Teil der Druckkammer umgibt. Durch Regelung der Temperatur des Wassers, das durch die Umlaufkammer strömt, kann die Temperatur und dadurch die Viskosität des in der Druckkammer vorhandenen Beschichtungsmaterials auf direkte und schnelle Weise derart beeinflusst werden, dass die Schichtdicke der angebrachten Beschichtung konstant bleibt.

Versuche haben gezeigt, dass mit der erfindungsgemässen Vorrichtung eine Faser innerhalb enger Toleranzen mit einer konzentrischen Beschichtung versehen werden kann und zwar auf reproduzierbare Weise, d. h. über Längen von einigen Kilometern und bei hohen Geschwindigkeiten, bis 700 m/Minute. Bei etwaigen Abweichungen kann durch eine geeignete Einstellung des rohrförmigen Führungselementes die Konzentrizität von Faser und Verkleidung wiederhergestellt werden.

Wie bereits erläutert, ist eine konzentrische Beschichtung insbesondere von Bedeutung für optische Glasfasern und für Kupferwickeldraht. Selbstverständlich kann die erfindungsgemässe Vorrichtung auf gleiche vorteilhafte Weise zum Beschichten von Fasern mit einer anderen Zusammensetzung, z. B. Kunststofffasern, Kohlenstofffasern, Metallfasern im allgemeinen u.v.a. verwendet werden.

Ein Ausführungsbeispiel der erfindungsgemässen Vorrichtung ist in der Zeichnung dargestellt und wird im folgenden näher beschrieben. Es zeigen:

Fig. 1    eine schematische Darstellung einer Anlage zum Ziehen optischer Fasern,
Fig. 2    einen Längsschnitt durch eine Vorrichtung nach der Erfindung zum Beschichten von Fasern,
Fig. 3    einen Schnitt durch die Vorrichtung gemäss der Linie III - III in Fig. 2,
Fig. 4    eine schematische Darstellung der Regelvorrichtung zum Zuführen von Beschichtungsmaterial,
Fig. 5    eine photographische Vergrösserung einer optischen Faser, die nach dem Verfahren nach der Erfindung beschichtet worden ist, in einem Masstab 200 : 1.

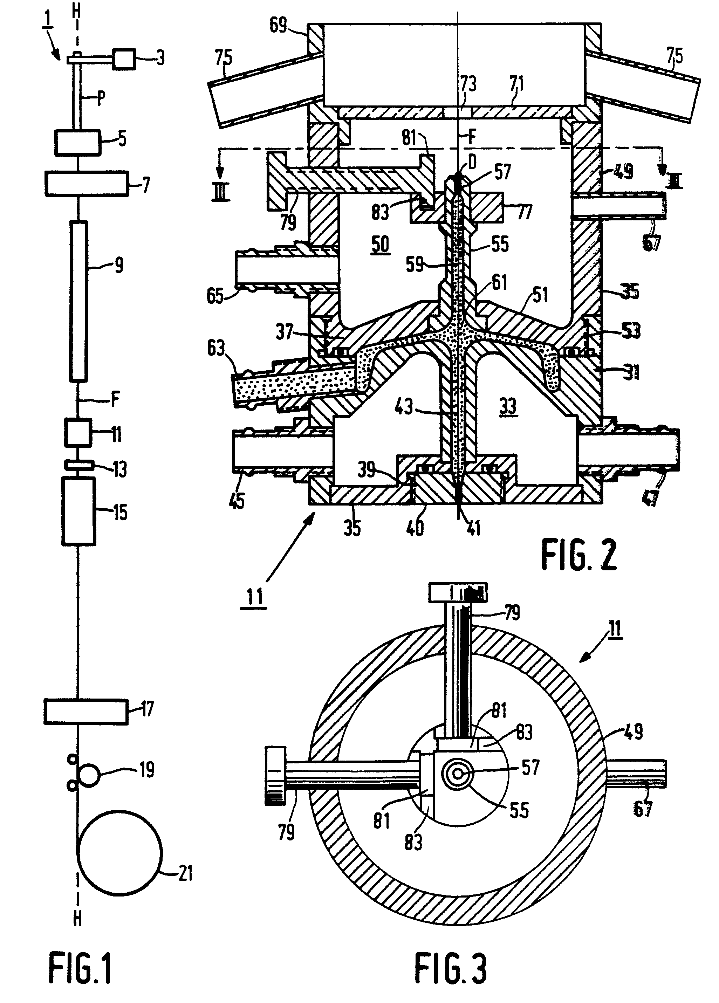

Die Erfindung wird anhand eines Ausführungsbeispiels zum Beschichten einer optischen Faser näher erläutert. Dazu dient die in Fig. 1 auf schematische Weise dargestellte an sich bekannte Anlage 1 mit einer Halterung 3 für eine Vorform, einem Ziehofen 5, einer Messvorrichtung 7 zum Messen des Faserdurchmessers, einer Kühlvorrichtung 9, einer Beschichtungsvorrichtung 11 zum Anbringen einer Beschichtung, einer Prüfvorrichtung 13 zum Überprüfen der konzentrischen Lage der Faser und der Beschichtung, einer Aushärtevorrichtung 15, einer Messvorrichtung 17 zum Messen des Durchmessers der beschichteten Faser, einem Tensiometer 19 zum Messen der Ziehkraft sowie einer Ziehvorrichtung, die in dem dargestellten Ausführungsbeispiel als Aufwickelspule 21 ausgebildet ist. Für das oft verwendete UV-härtende Beschichtungsmaterial wird eine mit UV-Licht arbeitende Aushärtevorrichtung verwendet.

Der Ziehofen 5, die Messvorrichtungen 7 und 17, die Kühlvorrichtung 9, die Prüfvorrichtung 13 und die Aushärtevorrichtung 15 können von an sich bekannter Konstruktion sein und bilden keinen Teil der vorliegenden Erfindung.

Diese Anlage 1 wird auf an sich bekannte Weise wie folgt verwendet. Aus einer Vorform P wird durch Erhitzung in dem Ziehofen 5 eine Faser F gezogen, wobei die Ziehgeschwindigkeit mittels der Durchmesser-Messvorrichtung 7 derart geregelt wird, dass der Durchmesser der Faser F möglichst konstant ist. Die Faser F wird in der Kühlvorrichtung 9 abgekühlt bis zu einer Temperatur, bei der eine Beschichtung aus Kunststoff angebracht werden kann. Das Beschichten der Faser erfolgt in der Beschichtungsvorrichtung 11. Nachdem die beschichtete Faser in der Prüfvorrichtung auf die einwandfreie konzentrische Lage der Faser und der Beschichtung überprüft worden ist, wird die Faser F durch die Aushärtevorrichtung 15 hindurchgeführt zum Aushärten der Beschichtung. In der Durchmesser-Messvorrichtung 17 wird der Durchmesser der beschichteten Faser und in dem Tensiometer 19 die Ziehkraft gemessen. Die fertige Faser wird auf die Spule 21 aufgewickelt die für den Transport der Faser F durch die Anlage 1 sorgt.

Die Fig. 2 und 3 zeigen die Beschichtungsvorrichtung 11 in einer Ausführungsform nach der Erfindung. Die Vorrichtung 11 ist von der sog. geschlossenen Bauart mit einer Zufuhr des Beschichtungsmaterials unter Druck und weist dazu ein Gehäuse 31 mit einer Umlaufkammer 33, einem Bodenteil 35 und einem Absperrteil 37 auf. In dem Bodenteil 35 ist mittels einer Schraubverbindung 39 eine Düse 40 austauschbar angebracht, die mit einer Ausströmungsöffnung 41 versehen ist, die sich an einen Ausströmungskanal 43 anschliesst. Die Anschlüsse 45 und 47 dienen für den Umlauf von warmem Wasser durch die Umlaufkammer 33. Der Absperrteil 37 weist einen zylinderförmigen Wandteil 49 und einen sich in der Querrichtung erstreckenden Wandteil 51 auf, die einen Raum 50 einschliessen und ist mittels einer Schraubverbindung 53 an dem Gehäuse 31 befestigt. Zentral in dem Wandteil 51 ist ein rohrförmiges Element 55 austauschbar befestigt, wobei dieses Element eine eingeschnürte Eingangsöffnung 57 und einen Führungskanal 59 aufweist und dessen Ende abgeflacht ist. Die Querwand 51 schliesst eine Kammer 61 ab. Ein Anschluss 63 dient zum Zuführen von Beschichtungsmaterial unter Druck zu der Kammer 61. Eine Ausströmungsöffnung 65 ist als Überlauf wirksam und dient zum Abführen etwaigen überströmenden Beschichtungsmaterials. In dem Wandteil 49 ist eine weitere Zuführungsöffnung 67 zum Zuführen eines Spülgases vorgesehen. Ein Deckel 69 mit einer Absperrwand 71 mit einer zentralen Durchlassöffnung 73 und mit Anschlüssen 75 dient zur forcierten Abfuhr des Spülgases mittels eines weiterhin nicht dargestellten Absaugsystems. Alle Teile mit Ausnahme des Rohrelementes 55 und der Absperrwand 71 sind aus rostfreiem Stahl hergestellt. Die Teile, die mit dem Beschichtungsmaterial in Berührung kommen sind poliert und ohne scharfe Kanten oder tote Ecken ausgebildet. Das Rohrelement 55 ist elastisch verformbar und ist vorzugsweise aus Polytetrafluorthylen gefertigt. In Höhe der Eingangsöffnung 57 ist auf dem Rohrelement 55 ein Einstellblock 77 befestigt. In der zylinderförmigen Wand 49 sind zwei senkrecht zueinander stehende Einstellschrauben 79 angeordnet, die mit Scheiben oder Rädchen 81 versehen sind, welche mit geradlinigen Führungsrillen 83 in dem Einstellblock 77 zusammenwirken. Die Absperrwand 71 ist aus Glas hergestellt, damit eine Beobachtung mit dem blossen Auge möglich ist.

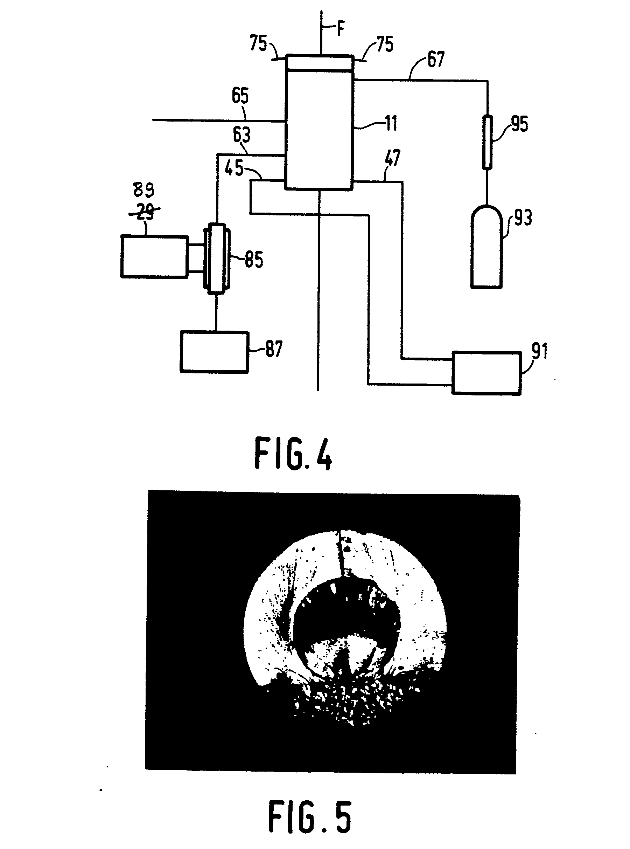

Fig. 4 zeigt auf schematische Weise ausser der Beschichtungsvorrichtung 11 die weiteren notwendigen Elemente zum Zuführen des Beschichtungsmaterials und des Gases sowie zum Umlaufen des Wassers in der Umlaufkammer 33. Durch 85 ist ein Vorratsgefäss bezeichnet, in dem eine bestimmte Menge Beschichtungsmaterial unter Druck und bei einer bestimmten Temperatur gespeichert ist. Durch 87 ist eine Druckregelvorrichtung bezeichnet. Das Beschichtungsmaterial wird mittels warmen Wassers auf eine bestimmte Temperatur gebracht, wobei die Zufuhr des Wassers mittel eines Thermostaten 89 geregelt wird. Beim Anwärmen des Beschichtungsmaterials erfolgt zugleich Entgasung, so dass alle Luftblasen daraus verschwinden. Durch 91 ist ein andere Thermostat dargestellt, der die Zufuhr von warmen Wasser zu der Umlaufkammer 33 regelt. Das Spülgas befindet sich unter Druck in einer Gasflasche 93. Die Ausströmungsmenge des Gases wird mit Hilfe des Durchströmungsmessers 95 gemessen und eingestellt. Die weiteren schematisch dargestellten Elemente sind obenstehend bereits beschrieben.

Zum Starten der beschriebenen Vorrichtung zum Beschichten einer optischen Faser mit einem Durchmesser von 125 μm wird zunächst von der Vorform P bei relativ niedriger Ziehgeschwindigkeit eine Faser mit allmählich abnehmendem Durchmesser gezogen bis der Faserdurchmesser etwa 125 μm beträgt. Die Faser wird dann gebrochen und wieder durch die Beschichtungsvorrichtung 11 und die Aushärtevorrichtung 15 gezogen und auf der Haspel 21 befestigt. Danach wird der Ziehvorgang fortgesetzt, die Aushärtevorrichtung 15 wird eingeschaltet und es wird Beschichtsmaterial C, ein UV-härtendes Akrylat, aus dem Vorratsbehälter 85, in dem es auf einer Temperatur von 65 bis 70 Grad C gehalten wird, durch den Anschluss 63 zu der Druckkammer 61 gepresst. In der Umlaufkammer 33 wird durch den Heizkreis eine Temperatur von 45 - 50 Grad C beibehalten, bei welcher Temperatur das Beschichtungsmaterial eine dynamische Viskosität von 1.3 Pa·s hat. Aus der Druckkammer 61 wird das Beschichtungsmaterial C zum Teil durch den Ausströmungskanal 43 zu der Ausströmungsöffnung 41 in der Düse 40 gepresst; auf diesem Weg wird das Beschichtungsmaterial von der Faser F aufgenommen. Ein anderer Teil des Beschichtungsmaterials wird von der Druckkammer 61 durch den Führungskanal 59 zu der Eingangsöffnung 57 gepresst. Zunächst entstehen beim Zuführen des Beschichtungsmaterials zu der Beschichtungsvorrichtung 11 viele Luftblasen in dem Beschichtungsmaterial. Beim allmählichen Steigern der Ziehgeschwindigkeit bis zum gewünschten Wert wird ein Übermass an Beschichtungsmaterial zugeführt, das über den Führungskanal 59, die Eingangsöffnung 57, den Raum 50 und zum Schluss den Überlauf 65 abgeführt wird. Dadurch wird die Beschichtungsvorrichtung 11 durchspült und die Blasen, die in der Anfangsphase entstehen, werden aus dem System entfernt. Mit zunehmender Ziehgeschwindigkeit wird der Druck auf das Beschichtungsmaterial gesteigert. Wenn die gewünschte Ziehgeschwindigkeit erreicht ist, wird der Druck auf das Beschichtungsmaterial in dem Vorratsgefäss 85 auf einen derartigen Wert eingestellt, dass das Beschichtungsmaterial an der Eingangsöffnung 57 einen konvexen Meniskus D bildet. Die Bildung dieses Meniskus wird dadurch erleichtert, dass das Rohrelement aus Tetrafluoräthylen gebildet wird. Im weiteren Verlauf bleibt diese Situation stabil und unveränderlich. In der eingeschnürten Eingangsöffnung 57 und in dem anschliessenden Teil des Führungskanals 59 erfolgt keine Zirkulation von Beschichtungsmaterial und keine Blasenbildung. Es hat sich herausgestellt, dass durch diese Massnahmen bis zu einer Ziehgeschwindigkeit von 150 m/Minute auf der Faser eine Beschichtung ohne Blasen angebracht werden kann. Eine völlig blasenfreie Beschichtung kann auch bei Ziehgeschwindigkeiten von 180 m/Minute und mehr auf Fasern angebracht werden, unter Anwendung einer weiteren Massnahme und zwar dadurch, dass in der Umgebung der Eingangsöffnung 57 und des konvexen Meniskus D eine Gasatmosphäre beibehalten wird, wobei die kinematische Viskosität dieses Gases kleiner ist als die von Luft. Dieses Gas wird über die Gaszufuhr 67 zugeführt, strömt durch den Raum 50, umspült die Eingangsöffnung 57 und den Meniskus D des Beschichtungsmaterials und verlässt den Raum 50 über die zentrale Öffnung 73 in dem Deckel 69. Über die Gasabführungsleitungen 75 kann dieses Gas abgeführt werden.

In der untenstehenden Tafel sind einige verwendbare Gase aufgeführt.

| Gas | $v$ | R |
|---|---|---|
| Luft | 14,8 | 1 |
| Ar | 12,3 | 0,83 |
| Xe | 3,8 | 0,26 |
| * Cl2F2 | 2,3 | 0,15 |

* Cl2F2 = Dichlordifluormethan
Dabei ist:
$v$ die kinematische Viskosität in $10^{-6} \cdot m^2/s$ bei 20 Grad C. R das Verhältnis $\frac{v_{Gas}}{v_{Luft}}$

Die Ziehgeschwindigkeit, bei der eine Faser ohne Blasenbildung beschichtet werden kann, kann um einen Faktor 4 bis 5 auf mindestens 700 m/Minute gesteigert werden, in dem ein Gas verwendet wird, dessen kinematische Viskosität nur 15 % von der von Luft beträgt und zwar Dichlordifluormethan.

Alle Teile der Ziehanlage 1 sind genau entsprechend der gemeinsamen Mittellinie H-H, mit der die Mittellinie der Faser F zusammenfällt ausgerichtet, damit eine radialsymmetrische Beeinflussung der Faser und zwar Erwärmen, Kühlen, Aushärten erhalten wird. Auch die Beschichtung soll koaxial bzw. konzentrisch gegenüber der Faser angebracht werden, d.h. die Dicke der Beschichtung soll über den Umfang der Faser gesehen konstant sein. Eine Faser mit einer nicht konzentrischen Beschichtung ist bei Abkühlung und Erhitzung nicht-konzentrischen asymmetrischen Kräften ausgesetzt. Diese asymmetrischen Kräfte sind die Folge ungleicher Ausdehnungskoeffizienten des Faser- und Beschichtungsmaterials und können zu unerwünschten Änderungen der optischen Eigenschaften der Faser führen.

Die konzentrische Lage der Faser und der Beschichtung wird mit Hilfe der Prüfvorrichtung 13 ständig gemessen. Ein Fehler in der Konzentrizität kann bei der erfindungsgemässen Vorrichtung auf einfache Weise dadurch korrigiert bzw. vermieden werden, dass das elastisch verformbare Rohrelement 55, das aus Polytetrafluoräthylen besteht, mittels der Einstellschrauben 79 eingestellt wird. Dadurch kann die verengte Eingangsöffnung 57 derart zentriert bzw. eingestellt werden, dass die Beschichtung wieder konzentrisch um die Faser liegt. Weitere Einstellungen bzw. Nachregelungen sind nicht erforderlich. Die Lage der Düse 40 mit der Ausströmungsöffnung bleibt ungeändert, fluchtend und koaxial zu der Mittellinie H-H der Anlage.

Fig. 5 zeigt eine photographische Vergrösserung (200x) der Bruchfläche einer Faser F mit einem Durchmesser von 125 µm mit einer Beschichtung C mit einer Schichtdicke von 60 µm, die mit der Vorrichtung nach der Erfindung bei einer Ziehgeschwindigkeit von 700 m/Minute und unter Verwendung von Dichlorfluormethan als Spülgas angebracht wurde. Die Beschichtung C ist gegenüber der Faser konzentrisch angebracht und hat eine nahezu überall gleiche Schichtdicke mit Abweichungen von etwa 2 µm. Das Resultat hat sich als reproduzierbar über grosse Längen, d. h. über Längen von einigen Kilometern erwiesen.

Empirisch hat es sich herausgestellt, dass eine eingeschnürte Eingangsöffnung mit einem Durchmesser von 0,9 bis 1,1 und mit einer Länge von 2 mm für Ziehgeschwindigkeiten bis 700 m/Minute geeignet ist. Der Führungskanal 59 hatte eine Länge von 30 mm und einen Durchmesser von 2,0 mm. Zum Beschichten einer Faser mit einem ursprünglichen Durchmesser von 125 µm bis zu einem Durchmesser von 250 µm einschliesslich der Beschichtung wurde eine Düse 40 verwendet, deren Ausströmungsöffnung einen Durchmesser von 350 µm hatte und eine Länge von 3 mm.

Die Schichtdicke der Beschichtung wird an erster Stelle durch die Abmessungen der Ausströmungsöffnung 41 in der Düse bestimmt. Die Schichtdicke wird jedoch auch durch die Temperatur und folglich durch die dynamische Viskosität des Beschichtungsmaterials beeinflusst, das sich in der Druckkammer 61 befindet. Es hat sich herausgestellt, dass die Schichtdicke auf einfache und wirksame Weise durch eine genaue Regelung der Temperatur und folglich der dynamischen Viskosität des Beschichtungsmaterials in der Druckkammer 61 durch Umlauf von warmem Wasser in der Umlaufkammer 33 kontrollierbar ist. Bei Abweichungen der gewünschten Schichtdicke der Beschichtung wird die Temperatur und dadurch die dynamische Viskosität des Beschichtungsmaterials in der Druckkammer 81 derart nachgeregelt, dass die gewünschte Dicke wieder erhalten und beibehalten wird.

Die genannte Ziehgeschwindigkeit von 700 m/Minute war die höchste Ziehgeschwindigkeit, welche die Ziehanlage leisten konnte. Wegen der aussergewöhnlichen Ergebnisse und der aussergewöhnlichen Effekte ist es wahrscheinlich, dass noch höhere Geschwindigkeiten möglich sind.

Im dem beschriebenen Ausführungsbeispiel werden die Spindeln 79 von Hand betätigt. Selbstverständlich ist es auch möglich, die Spindeln automatisch zu betätigen und zwar unter Ansteuerung durch die Prüfvorrichtung 13. Auf ähnliche Weise kann die Schichtdicke mittels der Messvorrichtung 17 automatisch eingestellt werden.

**Patentansprüche**

1. Vorrichtung zum Beschichten einer Faser mit einem Gehäuse mit einer Druckkammer, einer Düse mit einer Ausströmungsöffnung, einem Absperrteil, das die Druckkammer auf der Oberseite absperrt und das einen Führungskanal mit einer Eingangsöffnung aufweist zum Zuführen und Führen einer zu beschichtenden Faser, einer Zuführungsöffnung in der Wand des Gehäuses zum Zuführen flüssigen Beschichtungsmaterials und mit einer Überlauföffnung in der Seitenwand des Gehäuses, dadurch gekennzeichnet, dass der Führungskanal in einem rohrförmigen, elastisch verformbaren Führungselement angeordnet ist, das auf dem Absperrteil angebracht ist und von dem wenigstens das freie Ende in radialer Richtung einstellbar ist.

2. Vorrichtung nach Anspruch 1, dadurch gekennzeichnet, dass die Eingangsöffnung des Führungskanals eingeschnürt ist.

3. Vorrichtung nach Anspruch 1 oder 2, dadurch gekennzeichnet, dass das rohrförmige Führungselement aus Polytetrafluoräthylen hergestellt ist.

4. Vorrichtung nach Anspruch 1, 2 oder 3, dadurch gekennzeichnet, dass auf dem freien Ende des rohrförmigen Führungselementes ein Einstellblock angebracht ist, der mit zwei senkrecht aufeinander stehenden Führungsrillen versehen ist, die mit zwei scheibenförmigen Elementen zusammenwirken, welche an den Enden zweier senkrecht zueinander stehenden Spindeln angeordnet sind, die mittels einer Schraubverbindung in der Wand des Gehäuses einstellbar sind.

5. Vorrichtung nach einem der vorstehenden Ansprüche, dadurch gekennzeichnet, dass die Düse über einen verengten Ausströmungskanal mit der Druckkammer in Verbindung steht.

6. Vorrichtung nach einem der Ansprüche 1 bis 5, dadurch gekennzeichnet, dass das Gehäuse eine Umlaufkammer aufweist, die den der Ausströmungsöffnung zugewandten Teil der Druckkammer umgibt.

**Claims**

1. An apparatus for coating a fibre comprising a housing with a pressure chamber, a nozzle with an outlet opening, a closure part which closes the pressure chamber on the upper side and comprises a guide duct with an inlet opening for the supply and guidance of a fibre to be coated, a supply opening in the wall of the housing for the supply of liquid coating material, and an overflow opening in the side wall of the housing, characterized in that the guide duct is provided in a tubular elastically deformable guide member, which is arranged on the closure part and at least the free end of which is adjustable in radial direction.

2. An apparatus as claimed in Claim 1, characterized in that the inlet opening of the guide duct is restricted.

3. An apparatus as claimed in Claim 1 or 2, characterized in that the tubular guide member is made of polytetrafluoroethylene.

4. An apparatus as claimed in Claim 1, 2 or 3, characterized in that an adjustment block is mounted on the free end of the tubular guide member, said adjustment block being provided with two guide grooves which are arranged at right angles to each other and cooperate with two disk-shaped members provided on the ends of two spindles which are arranged at right angles to each other and are adjustable by means of a screw connection in the wall of the housing.

5. An apparatus as claimed in any one of the preceding Claims, characterized in that the nozzle is in communication with the pressure chamber via a narrowed outlet duct.

6. An apparatus as claimed in any one of Claims 1 to 5, characterized in that the housing has a circulation chamber which surrounds the part of the pressure chamber facing the outlet opening.

**Revendications**

1. Appareil pour revêtir une fibre comportant un boîtier muni d'une chambre de pression, une tuyère présentant un orifice d'écoulement, une partie de fermeture fermant la chambre de pression sur sa face supérieure et présentant un canal de guidage ayant un orifice d'entrée et servant à amener et guider une fibre devant être revêtue, une ouverture d'amenée dans la paroi du boîtier pour amener du matériau liquide de revêtement et, finalement, une ouverture de trop-plein dans la paroi latérale du boîtier, caractérisé en ce que le canal de guidage est disposé dans un élément de guidage tubulaire élastiquement déformable placé sur la partie de fermeture et dont au moins l'extrémité libre est réglable dans la direction radiale.

2. Appareil selon la revendication 1, caractérisé en ce que l'orifice d'entrée du canal de guidage présente un étranglement.

3. Appareil selon la revendication 1 ou 2, caractérisé en ce que l'élément de guidage tubulaire est en polytétrafluoroéthylène.

4. Appareil selon la revendication 1, 2 ou 3, caractérisé en ce qu'à l'extrémité libre de l'élément de guidage tubulaire est prévu un bloc de réglage présentant deux gorges de guidage perpendiculaires l'une à l'autre et coopérant avec deux éléments en forme de disque disposés aux extrémités de deux broches perpendiculaires l'une à l'autre et pouvant être réglées au moyen d'une liaison par vis dans la paroi du boîtier.

5. Appareil selon l'une des revendications précédentes, caractérisé en ce que la tuyère communique avec la chambre de pression par un canal d'écoulement rétréci.

6. Appareil selon l'une des revendications 1 à 5, caractérisé en ce que le boîtier présente une chambre à circulation entourant la partie de la chambre de pression, située en face de l'orifice d'écoulement.

FIG.1

FIG. 2

FIG.3

FIG. 4

FIG. 5